# EUROPÄISCHE PATENTSCHRIFT

(11) **EP 2 358 552 B1**
(45) Veröffentlichungstag und Bekanntmachung des Hinweises auf die Patenterteilung: **16.11.2016**
(21) Anmeldenummer: 09795680.9
(22) Anmeldetag: 18.12.2009
(51) Int. Cl.: B60H 1/22

(54) **ANORDNUNG EINER LADEVORRICHTUNG IN EINEM FAHRZEUG SOWIE VERFAHREN ZUR ERZEUGUNG VON WÄRMEENERGIE**
ARRANGEMENT OF A CHARGING DEVICE IN A VEHICLE AND METHOD FOR GENERATING HEAT ENERGY
ARRANGEMENT D'UN DISPOSITIF DE CHARGE DANS UN VEHICULE ET PROCÉDÉ DE PRODUCTION D'ÉNERGIE THERMIQUE

(30) Priorität: 19.12.2008 AT 19882008
(43) Veröffentlichungstag der Anmeldung: 24.08.2011
(73) Patentinhaber: Fronius International GmbH, 4643 Pettenbach (AT)
(72) Erfinder: ARTELSMAIR, Bernhard, A-4643 Pettenbach (AT); FINK, Reinhold, A-3340 Waidhofen an der Ybbs (AT); PFLUEGELMEIER, Helmut, A-4070 Eferding (AT); PRIELINGER, Andreas, A-4655 Vorchdorf (AT); SKLARSKI, Günther, A-4621 Sipbachzell (AT)
(74) Vertreter: Sonn & Partner Patentanwälte
(86) Internationale Anmeldenummer: PCT/AT2009/000491
(87) Internationale Veröffentlichungsnummer: WO 2010/078606

(56) Entgegenhaltungen:
- EP-A1- 1 696 175
- EP-A2- 0 166 329
- EP-A2- 1 332 897
- DE-A1- 19 529 564
- DE-A1-102004 020 507
- US-A- 4 249 694
- US-A- 4 365 952
- US-A- 5 813 850
- US-A1- 2006 066 106

## Beschreibung

Die Erfindung betrifft eine Anordnung einer Ladevorrichtung in einem Fahrzeug, wobei die Ladevorrichtung zum Laden eines Energiespeichers des Fahrzeugs dient und eine Stromerzeugungsvorrichtung, ein Ladegerät und weiteren Komponenten aufweist, wobei die Stromerzeugungsvorrichtung durch eine Wärmequelle, welche zumindest einen mit einer Zuleitung für einen Brennstoff verbundenen Brenner umfasst, und ein Thermoelement gebildet ist, und eine Seite des Thermoelements mit der Wärmequelle und die weitere Seite des Thermoelements mit einer Rückwand des Gehäuses verbunden ist, wobei die Stromerzeugungsvorrichtung, das Ladegerät und die weiteren Komponenten in einem gemeinsamem Gehäuse angeordnet sind.

Die Erfindung betrifft weiters ein Verfahren zur Erzeugung einer Wärmeenergie in einer Wärmequelle einer Stromerzeugungsvorrichtung einer Ladevorrichtung zum Laden eines Energiespeichers eines Fahrzeuges, wobei von einem Brenner der Wärmequelle die Wärmeenergie erzeugt wird, und die Wärmeenergie zumindest zum Teil von einem Thermoelement der Stromerzeugungsvorrichtung in Strom umgewandelt wird.

Aus dem Stand der Technik sind für den Einsatz im Temperaturbereich bis 500°C lediglich Brenner für flüssige Brennstoffe bekannt, welche den Brennstoff zerstäuben. Dazu muss der flüssige Brennstoff entsprechend mit einem hohen Druck zerstäubt werden, um das für die Verbrennung erforderliche Brennstoff-Luftgemisch zu erhalten. Nachteilig ist hierbei, dass zur Erzeugung des Drucks ständig Energie zugeführt werden muss, um den Verbrennungsprozess aufrecht zu erhalten.

Die DE 38 07 633 A1 beschreibt eine wiederaufladbare Batterie, welche unabhängig vom elektrischen Netz aufgeladen werden kann, indem mit einem Stromerzeuger Wärmeenergie direkt in elektrische Energie umgewandelt wird.

Die DE 195 29 564 A1 betrifft ein Kraftfahrzeug mit einer eingebauten Standheizung, wobei unter Ausnützung des Seebeck-Effekts elektrische Energie zur Versorgung der für die Standheizung notwendigen Komponenten enthält um die Autobatterie entsprechend zu entlasten.

Problematisch ist eine derartige ständige Energiezuführung insbesondere in jenen Fällen, bei denen der Brenner in Systemen mit einem Wirkungsgrad unter 20% verwendet wird. Wenn demnach der Brenner als Basis für eine Stromerzeugungsvorrichtung eingesetzt wird, muss darauf geachtet werden, dass der bereits ohnehin schlechte Wirkungsgrad nicht noch zusätzlich durch einen hohen Eigenverbrauch reduziert wird.

Eine derartige Stromerzeugungsvorrichtung ist aus der US 7,180,264 B2 bekannt und wird für tragbare Ladegeräte eingesetzt. Demzufolge wird von der Stromerzeugungsvorrichtung der Ladestrom für die Batterien erzeugt, wobei die Stromerzeugungsvorrichtung einen Tank mit Treibstoff, einen Brenner, ein Thermoelement und eine Steuervorrichtung beinhaltet. Das Thermoelement erzeugt aufgrund seiner physikalischen Eigenschaften eine elektrische Spannung bzw. elektrische Energie, wenn es an einen Verbraucher angeschlossen wird und somit ein elektrischer Strom fließt. Voraussetzung für das Auftreten der thermoelektrischen Spannung ist ein gewisser Temperaturunterschied zwischen einer Seite und der dieser gegenüberliegenden Seite des Thermoelements. Zu diesem Zweck wird eine Seite des Thermoelements mit Hilfe des Brenners, welcher den Treibstoff aus dem Tank verbrennt, erhitzt, wohingegen die andere Seite des Thermoelements Umgebungstemperatur aufweist, sodass der für die thermoelektrische Spannung notwendige Temperaturunterschied gewährleistet ist. Mit dieser Methode können insbesondere Lithium-Ionen- und Lithium-Polymer-Batterien mit einer maximalen Kapazität von 0,5 Amperestunden (Ah) geladen werden. Eine Batterie bzw. ein Energiespeicher mit einer höheren Kapazität, beispielsweise von 30 Ah und darüber, wie dies bei einem Energiespeicher eines Fahrzeugs, insbesondere Kraftfahrzeugs, der Fall ist, kann demgegenüber nicht schonend und effektiv geladen werden. Auch ist mit dem verwendeten Brenner, einem sogenannten Schneckenbrenner, keine stabile Verbrennung möglich, sodass der zur effektiven Stromerzeugung erforderliche konstante Temperaturunterschied nicht erzielt werden kann.

Die DE 10 2004 020 507 A1 beschreibt eine Verdampferanordnung für ein Brennstoffzellensystem, wobei im Brennergehäuse mehrere Bereiche angeordnet sind.

Die EP 1 696 175 A1 beschreibt ein Brennkammergehäuse für einen Verdampferbrenner für ein Fahrzeugheizgerät, wobei der Brenner im untersten Bereich des Brennergehäuses angeordnet ist.

Die EP 1 332 897 A2 offenbart eine Wärmetauscheranordnung für ein Heizgerät insbesondere eine Standheizung für ein Fahrzeug der gegenständlichen Art.

Die Aufgabe der vorliegenden Erfindung besteht in der Schaffung einer oben genannten Anordnung einer Ladevorrichtung in einem Fahrzeug zum Laden eines Energiespeichers und eines Verfahrens zur Erzeugung einer Wärmeenergie in einer Wärmequelle einer Stromerzeugungsvorrichtung einer Ladevorrichtung, durch welche eine konstant stabile Verbrennung und die Selbsterhaltung eines Verdampfungsprozesses möglich sind. Nachteile des Standes der Technik sollen vermieden oder zumindest reduziert werden.

Gelöst wird die Aufgabe durch eine oben genannte Anordnung einer Ladevorrichtung in einem Fahrzeug, bei der im untersten Bereich eines Brennergehäuses des Brenners ein Verdampfer für den zugeführten Brennstoff angeordnet ist, und die Rückwand des Gehäuses an einem zur Ableitung der Wärme dienenden Motorblock des Fahrzeugs befestigt ist. Vorteilhaft ist hierbei und bei den Merkmalen gemäß den Ansprüchen 2 bis 5, dass ein zuverlässiger Schutz vor Schmutz gewährleistet ist, da alles in der Vorrichtung integriert ist. Ebenso ist eine einfache Montage am Element des Fahrzeugs über die Rückwand der Ladevorrichtung gegeben, wobei die Rückwand gleichzeitig als Kühlkörper ausgeführt ist. Somit ist ein optimaler Wärmeübergang zwischen dem Element des Fahrzeugs und der Rückwand gewährleistet. Dementsprechend bilden nach der Befestigung des Gehäuses die Rückwand und das Element des Fahrzeugs ein gemeinsames Element zur Ableitung der Wärme, wodurch eine optimale Wärmeabfuhr und eine konstante Stromerzeugung gewährleistet wird. Eine im Wesentlichen vertikale Anordnung des Brenners ist von Vorteil, da der Aufbau des Brenners für diese Lage optimiert ist und somit eine optimale Nutzung gegeben ist.

Vorzugsweise sind im Brennergehäuse des Brenners mehrere Bereiche übereinander angeordnet, im untersten Bereich des Brennergehäuses der Verdampfer, gefolgt von einem Mischbereich, einem Brennraum und einem Abgasraum, und mit einer in einem Bereich angeordnet Zündvorrichtung, wobei im Brennraum ein keramischer Füllkörper oberhalb eines Distanzrings angeordnet ist, um sicher zu stellen, dass das Brennstoffgemisch nicht über den keramischen Füllkörper hinausströmt und der Verbrennungsprozess ausschließlich im Brennraum stattfindet, wobei der Distanzring im Inneren einen Raum bildet und die Zündvorrichtung in diesem Raum oder im Abgasraum angeordnet ist. Vorteilhaft ist hierbei und zumindest durch die Merkmale gemäß Anspruch 7, dass dadurch ein äußerst kompakter Aufbau, eine Selbsterhaltung des Verdampfungsprozesses und ein stabiler und dynamischer Verbrennungsprozess, wodurch der Leistungsbereich des Brenners in einem gewissen Bereich variabel ist, möglich sind. Dies wird zumindest auch teilweise durch die automatische Beimischung der Luft in der Mischkammer durch einen von der Düse erzeugten Unterdruck erreicht.

Wenn die Mischkammer zur Erzeugung eines Brennstoffgemischs ausgebildet ist, und die Mischkammer über eine Strömungsöffnung und ein Sieb mit dem Brennraum verbunden ist, wird die Ausströmgeschwindigkeit des Brennstoffdampfes gebremst und dieser verwirbelt wird, sodass eine gleichmäßige Verteilung erfolgt. Dadurch wird die Verbrennung äußerst effektiv stabilisiert.

Wenn der Brennraum mit dem im oberen Teil des Brennergehäuses angeordneten Abgasraum verbunden ist, und der Abgasraum über eine Auslassöffnung mit einem Wärmetauscher zur Weiterleitung zumindest eines Teils einer bei der Verbrennung im Brennraum gebildeten Wärmeenergie an ein Thermoelement verbunden ist, ist kein Rückstau der Abgase in den Brennraum möglich. Somit ist ein stabiler Verbrennungsprozess gewährleistet. Ebenso wird die vom Brenner erzeugte Hitze über den Wärmetauscher an das Thermoelement geleitet.

Durch die Maßnahmen gemäß den Ansprüchen 8 und 9 ist vorteilhaft, dass eine Vergrößerung der Oberfläche durch den Füllkörper erreicht wird. Dadurch verteilt sich der zugeführte Brennstoff auf dieser Oberfläche und wird dadurch gleichmäßig und vollständig verdampft, da dies auch die Wirkung eines sogenannten Tröpfchenabscheiders aufweist. Das heißt, dass die bei der Zuführung des Brennstoffs entstehenden Spritzer im Füllkörper bleiben und wiederum verdampfen. Ebenso resultiert durch die geregelte Brennstoffzufuhr in weiterer Folge ein optimales Brennstoff-Luftgemisch für eine optimale Flamme ohne Ruß. Entsprechend ist dazu auch die Temperatur des Verdampfers von Bedeutung, welche unter anderem aus der Rückführung der Wärmeenergie resultiert. Auch kann dies mit einer Heizeinrichtung gewährleistet werden, insbesondere in einer Startphase.

Zur Regelung der Luftzufuhr in die Mischkammer kann im Luftzufuhrrohr eine Klappe aus Bimetall angeordnet sein.

Von Vorteil ist auch, dass der Brennstoffdampf gereinigt wird, sodass die Lebensdauer der Düse verlängert wird. Der Reinigungsbereich kann beispielsweise durch zumindest einen Filter gebildet werden. Insbesondere werden Ablagerungen im Kanal der Düse wirkungsvoll verhindert.

Vorteilhafterweise ist eine mit dem Verdampfer des Brenners verbundene Heizeinrichtung vorgesehen und die äußere Form der Heizeinrichtung an die äußere Form des Brennergehäuses angepasst. Vorteilhaft ist hierbei und durch die Merkmale gemäß Anspruch 10, dass der Verdampfer zumindest in der Startphase auf die für einen stabilen Verdampfungsprozess erforderliche Temperatur gebracht wird, sodass entsprechend auch ein stabiler Verbrennungsprozess möglich ist. Ebenso ist in vorteilhafter Weise auch eine aktive Regelung während dem Verdampfungsprozess möglich.

Von Vorteil ist auch eine zwischen dem Verdampfer und dem Spulenkörper angeordnete Isolationsschicht, wodurch die Heizeinrichtung vor den hohen Temperaturen des Verdampfers geschützt ist und die Wicklungen nicht aufgeschmolzen werden.

Vorteilhafterweise wird die oben beschriebene Heizeinrichtung zumindest mit einem Teil eines oben beschriebenen Brenners zur Anwendung in einer oben beschriebenen Vorrichtung zum Laden eines Energiespeichers ausgebildet.

Vorteilhafterweise ist die Düse für den Brenner als Scheibe ausgebildet und an die Form des Brennergehäuses angepasst und weist zumindest einen Kanal auf, wobei die Höhe der Scheibe und die Form des Kanals an die Leistung des Brenners angepasst ist. Vorteilhaft ist hierbei und gemäß Anspruch 11, dass durch den sehr kurzen Kanal dieser im Wesentlichen nicht mehr zuwachsen kann, sodass eine kontinuierliche Bündelung des Brennstoffdampfes und des Druckaufbaus im Verdampfer gewährleistet ist.

Die Aufgabe wird auch durch ein oben genanntes Verfahren zur Erzeugung einer Wärmeenergie in einer Wärmequelle in einer Stromerzeugungsvorrichtung einer Ladevorrichtung zum Laden eines Energiespeichers eines Fahrzeugs gelöst, bei dem in einem im untersten Bereich eines Brennergehäuses des Brenners angeordneten Verdampfer des Brenners aus einem zugeführten Brennstoff ein Brennstoffdampf erzeugt wird, der Brennstoffdampf in einem Mischbereich des Brenners durch Beimischung von Luft zu einem Brennstoffgemisch vermischt und dieses in einem Brennraum des Brenners zur Erzeugung der Wärmeenergie verbrannt wird, wobei die Wärmeenergie über einen Abgasraum einer Seite des Thermoelements zugeführt wird und die andere Seite des Thermoelements an einem Motorblock des Fahrzeugs befestigt wird. Die damit verbundenen Vorteile und jene der Merkmale der Ansprüche 13 bis 15 können aus der obigen Beschreibung entnommen werden.

Das oben beschriebene Verfahren zur Erzeugung einer Wärmeenergie wird vorzugsweise mit einer oben beschriebenen Ladevorrichtung, Brenner, Heizeinrichtung und Düse durchgeführt.

Die vorliegende Erfindung und deren Vorteile gegenüber dem Stand der Technik werden anhand der beigefügten, schematischen Zeichnungen, welche ein Ausführungsbeispiel zeigen, näher erläutert. Darin zeigen:
Fig. 1 eine Anwendung der Ladevorrichtung in einem Kraftfahrzeug;
Fig. 2 eine schematisch dargestellte Ladevorrichtung;
Fig. 3 eine Schnittdarstellung einer schematisch dargestellten Ladevorrichtung in montiertem Zustand;
Fig. 4 eine schematische Darstellung eines Brenners der Ladevorrichtung;
Fig. 5 eine zweite Ausführungsform eines Brenners der Ladevorrichtung, schematisch dargestellt;
Fig. 6 eine dritte Ausführungsform des Brenners der Ladevorrichtung, schematisch dargestellt;
Fig. 7 ein Schema einer Düse der Ladevorrichtung; und
Fig. 8 eine Ausführungsform einer Heizeinrichtung der Ladevorrichtung.

Einführend wird festgehalten, dass gleiche Teile des Ausführungsbeispiels mit gleichen Bezugszeichen versehen werden.

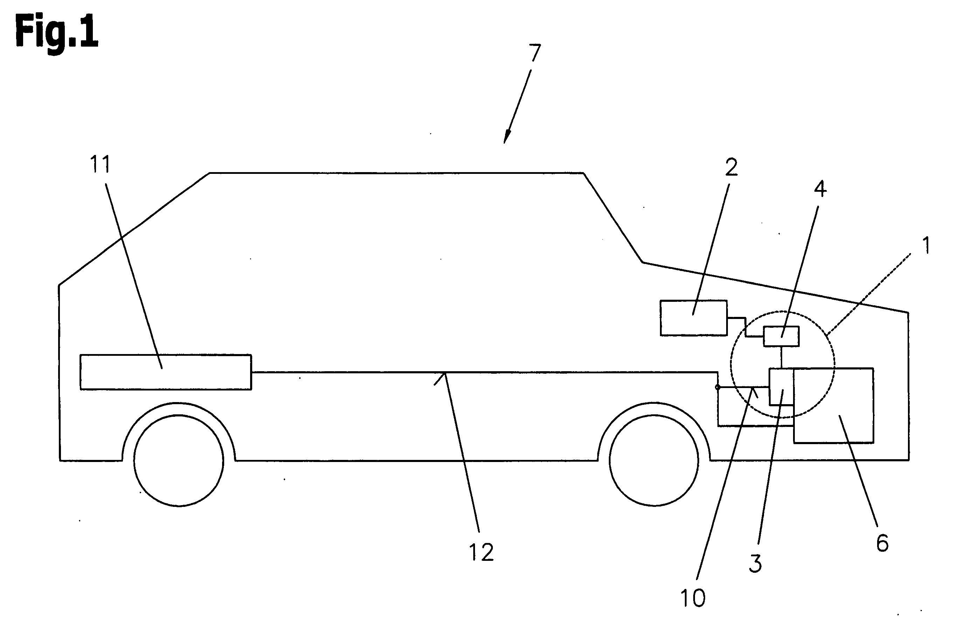

In Fig. 1 ist beispielhaft eine Anwendung einer Ladevorrichtung 1 bzw. eines Ladesystems zum Laden eines Energiespeichers 2 eines Fahrzeugs 7 dargestellt. Die Ladevorrichtung 1 beinhaltet eine Stromerzeugungsvorrichtung 3 und ein Ladegerät 4. Die Stromerzeugungsvorrichtung 3 und das Ladegerät 4 sind bevorzugt in einem Gehäuse 5 angeordnet, welches an einem Element des Fahrzeugs 7 (beispielsweise PKW, LKW, Motorrad, Schiff, usw.), welches zur Ableitung der Wärme ausgebildet ist, montiert ist. Dabei ist das Element zur Ableitung der Wärme beispielsweise ein metallischer Teil des Fahrzeugs 7, wie ein Motorblock 6. Entsprechend ist also der Motorblock 6 als Element zur Ableitung der Wärme ausgebildet. Die Stromerzeugungsvorrichtung 3 besteht zumindest aus einem Brenner 8, einem Thermoelement 9 und zumindest einem Element zur Ableitung der Wärme, wie nachfolgend im Detail beschrieben und gezeigt wird. Der Brenner 8 ist mit einer Zuleitung 10 für einen Brennstoff eines Tanks 11 des Fahrzeugs 7 verbunden, welche im Motorraum des Fahrzeugs 7 von einer Zuleitung 12 des Brennstoffs für den Motor abgezweigt wird. Die Ladevorrichtung 1 ist auch mit einer Steuervorrichtung 13, wie im Folgenden noch gezeigt wird, verbunden. Somit kann der Energiespeicher 2 geladen werden, indem die dazu erforderliche Leistung bzw. der dazu erforderliche Strom vom Thermoelement 9 erzeugt wird, sofern ein entsprechender Temperaturunterschied zwischen den beiden Seiten des Thermoelements 9 gegeben ist. Dieser Temperaturunterschied resultiert daraus, dass das Thermoelement 9 zwischen einer sogenannten "Heiß-Seite" und einer gegenüberliegenden sogenannten "Kalt-Seite" befestigt wird. Demzufolge wird die "Heiß-Seite" des Thermoelements 9 am Brenner 8 und die "Kalt-Seite" des Thermoelements 9 am Motorblock 6, welcher ja als Element zur Ableitung der Wärme dient, befestigt. Somit kann der Energiespeicher 2 eines abgestellten, nicht in Betrieb befindlichen Fahrzeugs 7 zur Erhaltung des Ladeniveaus des Energiespeichers 2 geladen werden. Das ursprüngliche Ladeniveau bzw. Ladezustand des Energiespeichers 2 kann somit lange aufrechterhalten werden, da einer Selbstentladung des Energiespeichers 2 aufgrund der Entnahme der gespeicherten Energie durch Verbraucher entgegengewirkt werden kann. Ebenso wird insbesondere durch eine schonende Ladung die Funktionalität des Energiespeichers 2 aufrechterhalten, sodass beispielsweise die Eigenschaften einer als Energiespeicher 2 eingesetzten Starterbatterie des Fahrzeugs 7 nicht beeinträchtigt werden.

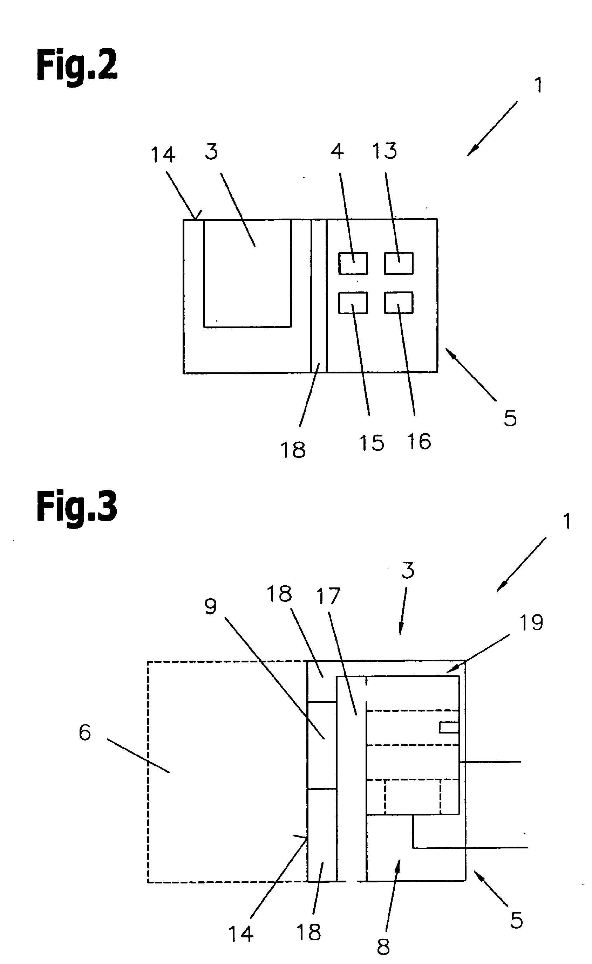

Es ist nun eine Ladevorrichtung 1 vorgesehen, bei welcher alle für die Ladevorrichtung 1 erforderlichen Komponenten in einem gemeinsamen Gehäuse 5 integriert sind. Dadurch ist eine einfache Montage bzw. ein nachträglicher Einbau in ein Fahrzeug 7 sehr einfach möglich. Der für diese Ladevorrichtung 1 erforderliche schematische Aufbau und die Funktion der Komponenten werden in Zusammenschau der folgenden Figuren 2 bis 8 im Detail beschrieben.

In den Fig. 2 und 3 sind eine Ladevorrichtung 1 und deren Komponenten dargestellt. Hieraus ist insbesondere erkennbar, dass das Gehäuse 5 im Wesentlichen geteilt ausgebildet ist, wobei in einem Teil die Stromerzeugungsvorrichtung 3 und im weiteren Teil das Ladegerät 4 und weitere Komponenten für die Ladevorrichtung 1, wie die Steuervorrichtung 13, ein Brennstofffilter 15 und eine Brennstoffpumpe 16, angeordnet sind. Die Teilung des Gehäuses 5 kann durch eine Isolierung 18 realisiert werden, auf welche später noch im Detail eingegangen wird.

Die Stromerzeugungsvorrichtung 3 beinhaltet eine Wärmequelle, bestehend aus dem Brenner 8 und bevorzugt einem Wärmetauscher 17, und das Thermoelement 9. Die Rückwand 14 des Gehäuses 5 bildet die "Kalt-Seite" und der Wärmetauscher 17 die "Heiß-Seite" des Thermoelements 9, welches vorzugsweise direkt mit diesen Komponenten verbunden ist. Demnach wird über den Wärmetauscher 17 die "Heiß-Seite" mit einer entsprechenden Wärmeenergie erwärmt, wobei die vom Thermoelement 9 nicht verwertbare Wärmeenergie über die Rückwand 14 und in weiterer Folge über den als Element zur Ableitung der Wärme dienenden Motorblock 6 abgeführt wird. Zusätzlich ist die Rückwand 14 als Kühlkörper und demzufolge auch bereits als Element zur Ableitung der Wärme ausgeführt, sodass die Ladevorrichtung 1 unabhängig vom Motorblock 6 arbeiten kann. Bevorzugt wird aber die Rückwand 14 am Motorblock 6 montiert, sodass durch die Rückwand 14 und den Motorblock 6 ein gemeinsames Element zur Ableitung der Wärme gebildet wird und die mögliche Betriebsdauer der Ladevorrichtung 1 verlängert wird.

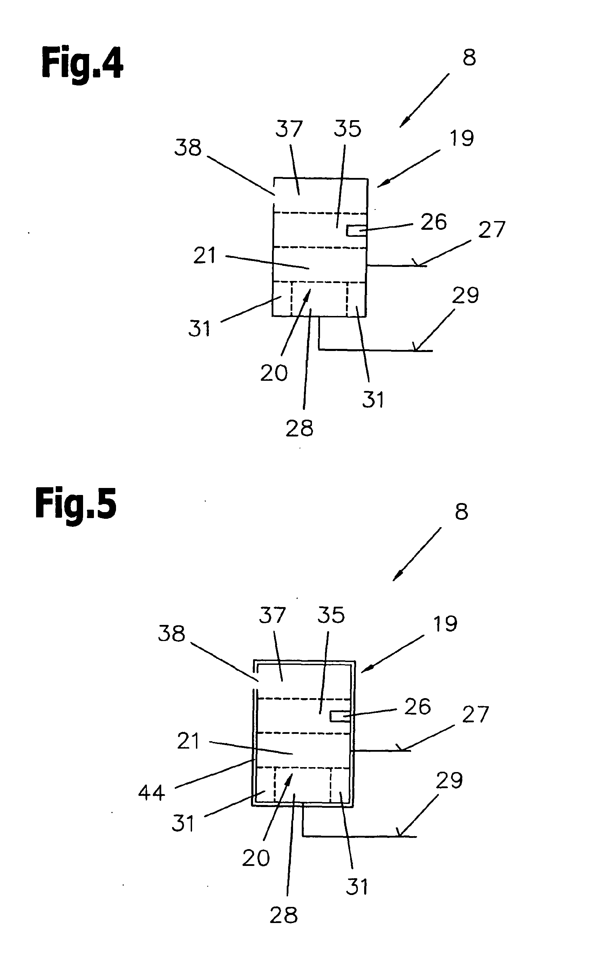

Die zur Stromerzeugung über das Thermoelement 9 erforderliche Wärmeenergie wird über den mit dem Wärmetauscher 17 gekoppelten Brenner 8, welcher den Brennstoff verbrennt, erzeugt. Diese im Brenner 8 gebildete Wärmeenergie setzt sich aus einer Abgaswärme, einer Wärmestrahlung und einer Wärmeübertragung durch einen mechanischen Kontakt zusammen. Die Wärmeenergie wird vom Energiedurchsatz bzw. -umsatz bestimmt, welcher im Wesentlichen von der zugeführten Menge des Brennstoffs abhängig ist. Die Abgaswärme wird derart genutzt, dass die bei der Verbrennung des Brennstoffs im Brenner 8 entstehenden heißen Abgase in den oberen Teil des Wärmetauschers 17 geleitet werden und entsprechend im unteren Teil aus dem Gehäuse 5 geleitet werden. Dadurch wird also der Wärmetauscher 17 und in weiterer Folge die "Heiß-Seite" des Thermoelements 9 erhitzt. Die Wärmestrahlung und die Wärmeübertragung durch den mechanischen Kontakt zwischen Brenner 8 und Wärmetauscher 17 sind dabei eher als ergänzender Nebeneffekt zu betrachten. Der Grund hierfür liegt darin, dass diese Art der Wärmeenergie in erster Linie zur Selbsterhaltung und Stabilisierung des Verbrennungsprozesses herangezogen wird. Dazu weist der Brenner 8 eine sogenannte Luftspaltisolierung 44 auf, welche durch einen mit Luft gefüllten Raum gebildet ist. Dieser Raum wird bevorzugt durch einen Hohlzylinder bzw. einen doppelwandigen Zylinder gebildet, wie in Fig. 5 dargestellt ist. Demnach ist das Brennergehäuse 19 von diesem Hohlzylinder umhüllt und zwischen dem Hohlzylinder und dem Brennergehäuse 19 die Luftspaltisolierung 44 gebildet. Der Hohlzylinder wird bevorzugt mit Stegen am Brennergehäuse 19 befestigt und weist auch jene Öffnungen auf, die das Brennergehäuse 19 aufweist. Das heißt aber auch, dass der Brenner 8 durch den Hohlzylinder im Gehäuse 5 befestigt ist und über diesen mit dem Thermoelement 9 bzw. über den Wärmetauscher 17 mit dem Thermoelement 9 verbunden ist. Die Luftspaltisolierung 44 kann auch dadurch gebildet werden, indem der Wärmetauscher 17 zur Aufnahme des Brenners 8 ausgebildet wird (nicht dargestellt). Dabei ist allerdings der Hauptteil des Wärmetauschers 17 auf jenen Teil konzentriert, welcher dem Thermoelement 9 zugeordnet ist. Die Befestigung des Brenners 8 im Wärmetauscher 17 erfolgt bevorzugt durch eine Presspassung, wobei durch Haltepunkte zwischen Wärmetauscher 17 und Brenner 8 die Luftspaltisolierung 44 gebildet wird. Somit ist der Brenner 8 durch die Haltepunkte im Wärmetauscher 17 gehalten. Dadurch ist also trotz der Luftspaltisolierung 44 auch die Wärmeübertragung durch den mechanischen Kontakt gewährleistet.

Damit nun die aus der Abgaswärme, der Wärmestrahlung und der Wärmeübertragung durch den mechanischen Kontakt zusammengesetzte Wärmeenergie noch effizienter für die Stromerzeugung genutzt werden kann, ist eine Isolierung 18 der Stromerzeugungsvorrichtung 3 vorgesehen. Dadurch wird ein Verlust von Wärmeenergie verhindert und ein konstanter Temperaturunterschied zwischen der "Heiß-Seite" und der "Kalt-Seite" des Thermoelements 9 gewährleistet.

Zum Betrieb des Brenners 8 und in weiterer Folge der Stromerzeugungsvorrichtung 3 ist es erforderlich, den Brenner 8 mit einem Brennstoff aus dem Tank 11 des Fahrzeugs 7 zu versorgen. Dazu weist das Gehäuse 5 einen Anschluss für die Zuleitung 10 auf, sodass der Brennstoff über die im Gehäuse 5 angeordnete Brennstoffpumpe 16 dem Brenner 8 zugeführt werden kann. Optional kann in der Brennstoffzufuhr auch noch ein Brennstofffilter 15 integriert sein, sodass der Verbrennungsprozess nicht von Verschmutzungen des zugeführten Brennstoffs beeinträchtigt wird. Die Brennstoffzufuhr bzw. die Brennstoffpumpe 16 wird von der Steuervorrichtung 13 geregelt, sodass ein optimaler Verbrennungsprozess im Brenner 8 stattfinden kann. Dazu kann beispielsweise ein Durchflusssensor in der Brennstoffzufuhr integriert sein, welcher die Steuervorrichtung 13 mit den entsprechenden Informationen versorgt. Eine wesentliche Information kann die Steuervorrichtung 13 aber auch aus der Leistungsaufnahme der Brennstoffpumpe 16 erhalten. Damit kann jener Druck ermittelt werden, mit welchem der Brennstoff in den Verdampfer 28 des Brenners 8 gefördert wird. Selbstverständlich können mit der Steuervorrichtung 13 noch weitere Sensoren verbunden sein, durch welche ein optimaler Verbrennungsprozess bzw. in weiterer Folge die optimale Nutzung des Thermoelements 9 zur Stromerzeugung ermöglicht wird. Dies können beispielsweise Sensoren zur Messung diverser Temperaturen (Element(e) zur Ableitung der Wärme, Wärmequelle, Abgas, usw.), des Stroms, Spannung, Druck und dgl. sein. Diese Sensoren sind entweder direkt oder über einen Datenbus mit der Steuervorrichtung 13 verbunden. Der von der Stromerzeugungsvorrichtung 3 bzw. vom Thermoelement 9 erzeugte Strom kann dem Ladegerät 4 zugeführt werden. Das Ladegerät 4 ist in einem außerhalb der Isolierung 18 befindlichen Teil des Gehäuses 5 angeordnet. Das Ladegerät 4 wandelt diesen Strom nun derart um, dass der Energiespeicher 2 (außerhalb der Ladevorrichtung 1) effizient geladen werden kann. Dazu ist bevorzugt das Ladegerät 4 entsprechend mit der Steuervorrichtung 13 verbunden. Da eine derartige Funktion des Ladegeräts 4 aus dem Stand der Technik bekannt ist, wird darauf nicht näher eingegangen. Die Isolierung 18 dient auch dazu, die weiteren Komponenten, insbesondere das Ladegerät 4, die Steuervorrichtung 13 und die Brennstoffpumpe 16, vor Überhitzung zu schützen.

Die Ladevorrichtung 1 ist bei der Inbetriebnahme im Fahrzeug 7 lediglich mit dem Motorblock 6, der Zuleitung 12 und dem Energiespeicher 2 zu verbinden. Weiters kann die Steuervorrichtung 13 mit einer Steuervorrichtung des Fahrzeugs 7 verbunden werden. Die Rückwand 14 des Gehäuses 5 wird dabei bevorzugt so am Motorblock 6 befestigt, dass der Brenner 8 im Wesentlichen vertikal zum Untergrund des Fahrzeugs 7 ausgerichtet ist und somit ein stabiler Verbrennungsprozess gewährleistet werden kann. Für die Verbindung mit dem Energiespeicher 2, also der Batterie des Fahrzeugs 7, ist bevorzugt eine entsprechende Kupplung bzw. entsprechender Stecker im Gehäuse 5 vorgesehen. Diese wird derart ausgeführt, dass die Komponenten im Inneren des Gehäuses 5 vor Verschmutzungen und Feuchtigkeit geschützt sind. Die Kabel müssen dabei von der Kupplung bzw. dem Stecker der Ladevorrichtung 1 zum Energiespeicher 2 derart verlegt werden, dass diese den Betrieb des Fahrzeugs 7 nicht beeinträchtigen. In gleicher Weise muss auch die Zuleitung 12 für den Brennstoff verlegt werden, welche ebenso an einem vorgesehenen Anschluss am Gehäuse 5 angeschlossen wird.

Eine der Hauptkomponenten der Ladevorrichtung 1 ist der Brenner 8, welcher anhand der Fig. 4 bis 6 im Detail beschrieben wird, wobei dies zumindest auch in Zusammenschau mit Fig. 3 zu betrachten ist. Auch können die einzelnen beschriebenen Ausführungen des Brenners 8 kombiniert werden. Hieraus ist das Brennergehäuse 19 ersichtlich, welches mehrere, übereinander angeordnete Bereiche aufweist. Der unterste Bereich wird durch einen Verdampfer 28 gebildet, in welchem ein Füllkörper angeordnet sein kann. Der Verdampfer 28 weist einen Anschluss für eine Zuleitung 29 für den Brennstoff auf. Über dem Verdampfer 28 befindet sich ein Mischbereich 21, an welchem ein Luftzufuhrrohr 27 angeschlossen ist, sodass ein Brennstoffgemisch gebildet werden kann. Zwischen dem Verdampfer 28 und dem Mischbereich 21 ist eine Düse 20 angeordnet. Oberhalb des Mischbereichs 21 befindet sich der Brennraum 35, in welchem das Brennstoffgemisch verbrannt wird und bevorzugt die Zündvorrichtung 26 integriert ist.

Als Übergang vom Mischbereich 21 zum Brennraum 35 ist bevorzugt ein Sieb angeordnet. Auch ist dieser Übergang dicht ausgeführt, sodass das Brennstoffgemisch nicht mehr verändert werden kann. Der Brennraum 35 beinhaltet weiters zumindest einen Distanzring und zumindest einen keramischen Füllkörper, welche beispielsweise mit einem Sicherheitsring in Position gehalten sind. Über dem keramischen Füllkörper bzw. dem Sicherheitsring ist ein Abgasraum 37 angeordnet.

Das Brennergehäuse 19 besteht im Wesentlichen aus zwei Körpern, welche allerdings bevorzugt aus einem Teil gefertigt sind. Dabei sind beide Körper zylindrisch ausgebildet, wobei ein Körper durch den Verdampfer 28 gebildet ist und der weitere Körper die darüber liegenden Bereiche enthält und die äußere Form des Brennergehäuses 19 darstellt. Der zylinderförmige Körper des Verdampfers 28 weist einen geringeren Durchmesser auf, als der darüber angeordnete zylinderförmige Körper. Dies ist darauf zurückzuführen, dass der Verdampfer 28 mit einer Heizeinrichtung 31 verbunden ist. Bevorzugt ist die Heizeinrichtung 31 um den Verdampfer 28 angeordnet, sodass anschließend das Brennergehäuse 19 durch einen gemeinsamen Zylinder gebildet ist. Somit ist die äußere Form der Heizeinrichtung 31 an die äußere Form des Brennergehäuses 19 angepasst. Ebenso bilden die Heizeinrichtung 31 und der Verdampfer 28 im Wesentlichen eine Einheit. Die Heizeinrichtung 31 kann auch im Verdampfer 28 integriert sein. Dadurch wird ein äußerst kompakter Aufbau des Brenners 8 möglich. So übersteigt der Durchmesser bzw. die Höhe des Brennergehäuses 19 vorzugsweise einen Wert von drei bzw. sieben Zentimetern nicht, wobei dies entsprechend von der Leistung des Brenners 8 abhängig ist. Die Funktion der Bereiche und die Abhängigkeiten zwischen den Bereichen sind durch den kompakten Aufbau uneingeschränkt möglich, sodass ein stabiler Betrieb des Brenners 8 gewährleistet ist.

Die Zuleitung 29 ist mit der Brennstoffpumpe 16 verbunden, welche wiederum an der Zuleitung 10 angeschlossen ist, sodass der über die Zuleitung 10 zugeführte Brennstoff in den Verdampfer 28 gelangt und entsprechend verdampft wird. Die Verdampfung ist im Wesentlichen in zwei Phasen zu unterteilen, in eine Startphase, welche als Ausgangspunkt einen vollständig abgekühlten Brenner 8 hat, und eine Betriebsphase, welche der Startphase folgt, sobald sich ein stabiler Verbrennungsprozess eingestellt hat. Zur Startphase ist die Heizeinrichtung 31 erforderlich, durch welche der Verdampfer 28 und auch der Füllkörper im Verdampfer 28 von außen auf eine Temperatur über 100°C aufgeheizt wird. Ist diese Temperatur erreicht, wird die Brennstoffzufuhr gestartet, also die Brennstoffpumpe 16 aktiviert. Sobald der Brennstoff den Verdampfer 28 erreicht, wird dieser im Wesentlichen sofort verdampft. Dies ist insbesondere darauf zurückzuführen, dass der Füllkörper - beispielsweise Stahlwolle - die Oberfläche des Verdampfers 28 vergrößert. Ebenso bewirkt der Füllkörper eine Trennung zwischen einer Dampfphase und einer Flüssigphase. Der flüssige Brennstoff benetzt also bei Eintritt in den Verdampfer 28 (Flüssigphase) die heiße Oberfläche des Füllkörpers und wird dadurch entsprechend verdampft (Dampfphase). Bevorzugt wird der Brennstoff von unten zugeführt, sodass die Verdampfung im unteren Bereich des Füllkörpers stattfindet. Der obere Teil des Füllkörpers 30 bremst dabei den bei der Verdampfung des Brennstoffs entstehenden Brennstoffdampf, welcher sich anschließend in einem Gasraum unterhalb der Düse 20 ansammelt. Durch die kontinuierliche Förderung des Brennstoffs, beispielsweise mit 5 bis 20 ml pro Minute (leistungsabhängig), wird im Gasraum das Volumen des Brennstoffdampfes entsprechend erhöht. Ist ein gewisses Volumen mit einem daraus resultierenden Druck erreicht, tritt das Brennstoffgemisch durch einen sehr kleinen Kanal 42 der Düse 20 aus. Dabei ist die Form des Kanals 42 bzw. beispielsweise der Durchmesser eines den Kanal 42 bildenden Lochs an das Volumen des Brennstoffdampfes angepasst, welches im Wesentlichen auch von der Leistung des Brenners 8 abhängig ist. So bewegt sich der Durchmesser bzw. die Form des Kanals 42 bevorzugt in einem Bereich zwischen 0,02 mm bis 0,15 mm, wobei auch die Höhe der als Scheibe ausgebildeten Düse 20 im Wesentlichen in diesem Bereich liegt. Die geringe Höhe hat den Vorteil, dass die Ablagerung von Schmutzstoffen verhindert bzw. erschwert wird. Aus diesem Grund wird die Düse 20 auch als Fokussierungsblende oder als Folie bezeichnet. Der Brennstoffdampf wird dadurch gebündelt und tritt mit einem gewissen Druck aus der Düse 20 in eine Mischkammer des Mischbereichs 21 aus. Je nach Dimensionierung bzw. Leistung des Brenners 8 kann beispielsweise ein Druck für den Betrieb von 30 bar oder darüber erzeugt werden. Der austretende Brennstoffdampf wird auch als Jet bezeichnet, der durch zumindest eine Öffnung, welche die Mischkammer und eine Luftkammer verbindet, mit Luft versetzt wird, sodass ein entzündliches Brennstoffgemisch gebildet wird. Die Luft wird über einen vom Jet erzeugten Unterdruck über die Öffnungen angesaugt, wobei die Luft zuerst über das Luftzufuhrrohr 27 in die abgeschlossene Luftkammer und in weiterer Folge über die Öffnungen in die Mischkammer geleitet wird. Zur besseren Vermischung des Brennstoffgemischs ist im Mischbereich 21 oberhalb der Mischkammer eine Strömungsöffnung angeordnet. Diese beschleunigt den Jet, sodass Verwirbelungen entstehen, aus denen wiederum eine bessere Vermischung resultiert.

Die Strömungsöffnung ergibt sich im Wesentlichen durch den Aufbau des Mischbereichs 21, welcher im Zentrum des Mischbereichs 21 eine Verengung aufweist. Dazu weist der Mischbereich 21 die Form einer Sanduhr auf bzw. beinhaltet der Mischbereich 21 eine Komponente mit der Form einer Sanduhr. Dabei ist die Verengung von der Luftkammer umgeben, also im äußeren Bereich des Mischbereichs 21 die Luftkammer angeordnet, wobei die Mischkammer den unteren Teil der Sanduhr darstellt. Der obere Teil der Sanduhr dient zur Verteilung des Brennstoffgemischs, wie nachfolgend noch näher beschrieben wird. Durch die Verengung im Zentrum des Mischbereichs 21 resultiert aber auch, dass der Kanal 42 bzw. das Loch der Düse 20 und die Strömungsöffnung fluchtend angeordnet sind, sodass der Brennstoffdampf ohne Hindernisse in die Brennkammer 35 geleitet werden kann.

Damit das ausströmende Brennstoffgemisch für einen stabilen Verbrennungsprozess im Brennraum 35 verwendet werden kann, ist im ersten Schritt ein Sieb vorgesehen. Dieses Sieb stellt den Übergang zwischen Mischbereich 21 und Brennraum 35 dar und bewirkt eine Reduktion der Ausströmgeschwindigkeit des Brennstoffgemischs. Somit kann sich das gebremste Brennstoffgemisch gleichmäßig über den gesamten Querschnitt des Brennergehäuses 19 verteilen. Dazu ist ein entsprechender Raum vorgesehen, welcher einen Teil des Brennraums 35 bildet. Zur Verteilung trägt auch der obere Teil der Sanduhr bei, welcher einen Teil des auf das Sieb treffenden Jets auffängt, sodass dieser Teil in den Randbereichen des Siebs durch dieses in den Brennraum 35 strömen kann.

Zusätzlich kann das Sieb auch fächerförmige Strömungselemente aufweisen, die in Bezug zur Ebene des Siebs verdreht ausgebildet sind, sodass eine radiale Ablenkung des durchströmenden Brennstoffgemischs erfolgt. Somit wird der Jet über die fächerförmigen Strömungselemente abgelenkt, in Rotation gebracht und eine bessere Verteilung erreicht.

Über dem Raum im Brennraum 35 kann der keramische Füllkörper angeordnet sein, welcher beispielsweise auf einem Distanzring aufliegt. Demnach sind zumindest der Distanzring und der keramische Füllkörper Komponenten des Brennraums 35. Der Distanzring bestimmt das Volumen des Raums. Der Distanzring kann auch Teil der Sanduhr des Mischbereichs 21 sein. Der keramische Füllkörper hat unter anderem die Aufgabe, die Durchmischung des Brennstoffgemischs weiter zu fördern und die Verbrennung über einen weiten Dynamikbereich zu stabilisieren. Dadurch wird erreicht, dass das Brennstoffgemisch nicht über den keramischen Füllkörper hinausströmt und der Verbrennungsprozess ausschließlich im Brennraum 35 stattfindet. Der Brennraum 35 ist also im Wesentlichen zwischen Sieb und Oberkante des keramischen Füllkörpers definiert.

Der Verbrennungsprozess wird mit einer Zündvorrichtung 26, welche aus einer Zündkerze und einer bevorzugt in der Steuervorrichtung 13 integrierten Zündelektronik besteht, gestartet, indem das Brennstoffgemisch durch einen Funken der Zündkerze entzündet, eine Flamme gebildet und das Brennstoffgemisch im Brennraum 35 verbrannt wird. Beim Verbrennungsprozess entsteht die Wärmeenergie, welche für die Stromerzeugungsvorrichtung 3 erforderlich ist. Die Zündkerze ist bevorzugt im oben beschriebenen Raum angeordnet, da hier die Konzentration des Brennstoffdampfes hoch genug ist um den Brennstoffdampf leicht zu entzünden. Die Zündkerze kann aber auch in einem Abgasraum 37 oberhalb des keramischen Füllkörpers angeordnet sein. Im Abgasraum 37 sammeln sich die heißen Abgase des Verbrennungsprozesses, welche über eine Auslassöffnung 38 im Brennergehäuse 19 in den Wärmetauscher 17 geleitet werden. Der Wärmetauscher 17 wird somit von den heißen Abgasen der Wärmeenergie durchströmt und die "Heiß-Seite" für das Thermoelement 9 gebildet. Dementsprechend ist der Abgasraum 37 der oberste Bereich des Brenners 8 im Brennergehäuse 19.

Ein derartiger Aufbau des Brenners 8 kann dahingehend optimiert werden, dass dieser im Wesentlichen normal zu einer Waagrechten ausgerichtet wird. Der Brenner 8 soll im Betrieb vertikal ausgerichtet sein, sodass eine effiziente Nutzung gewährleistet ist. Sollte das Fahrzeug 7 auf einem schrägen Untergrund abgestellt werden, kann mit einer entsprechenden Vorrichtung - welche ebenso zur Ableitung der Wärme ausgebildet ist - zwischen Rückwand 14 und Motorblock 6 der Brenner 8 ausgerichtet werden. Durch einen derartigen Aufbau des Brenners 8 wird auch erreicht, dass zumindest ein Teil der durch den Verbrennungsprozess im Brennraum 35 entstehenden Wärmeenergie in den Verdampfer 28 rückgeführt wird. Dies ist im Wesentlichen darauf zurückzuführen, dass der Verdampfer 28 Teil des Brennergehäuses 19 ist und somit thermisch mit dem Brennraum 35 gekoppelt ist. Der Teil des Brennergehäuses 19 um den Brennraum 35 wird erhitzt und diese Hitze über das gesamte Brennergehäuse 19 verteilt und von jenem Teil des Brennergehäuses 19, welcher den Verdampfer 28 bildet, entzogen. Insbesondere wird dadurch auch der Füllkörper im Verdampfer 28 erhitzt, welcher das Brennergehäuse 19 berührt. Somit ist gewährleistet, dass der Verdampfer 28 in der Betriebsphase im Wesentlichen stets die Temperatur aufweist, um den flüssigen Brennstoff zu verdampfen. Dazu ist üblicherweise eine Temperatur größer 200°C erforderlich.

In der Betriebsphase wird die Heizeinrichtung 31 abgeschaltet. Dies regelt die Steuervorrichtung 13 entsprechend, welche über entsprechende Temperatursensoren (nicht dargestellt) zumindest die Temperatur des Verdampfers 28 erfasst und auswertet. Der Verdampfer 28 ist also als Teil des Brennergehäuses 19 zur Selbsterhaltung des Verdampfungsprozesses ausgebildet. Selbstverständlich kann die Heizeinrichtung 31 auch in der Betriebsphase aktiviert werden, insbesondere dann, wenn die Wärmerückgewinnung nicht ausreichend ist, was über die Temperatursensoren erkannt wird. Beispielsweise kann dies der Fall sein, wenn die Menge der Brennstoffzufuhr erhöht werden muss, um die Leistung des Ladegeräts 4 zu erhöhen. Da die Rückführung der Wärme zur Selbsterhaltung des Verdampfungsprozesses über das Brennergehäuse 19 eher träge ist, ist eine kurzzeitige Aktivierung der Heizeinrichtung 31 erforderlich. Die Heizeinrichtung 31 kann auch einen Einfluss auf die Regelung des Verdampfungsprozesses und in weiterer Folge auf den Verbrennungsprozess haben, indem der Jet verändert wird, wodurch sich die Beimischung der Luft und somit auch das Brennstoffgemisch verändert.

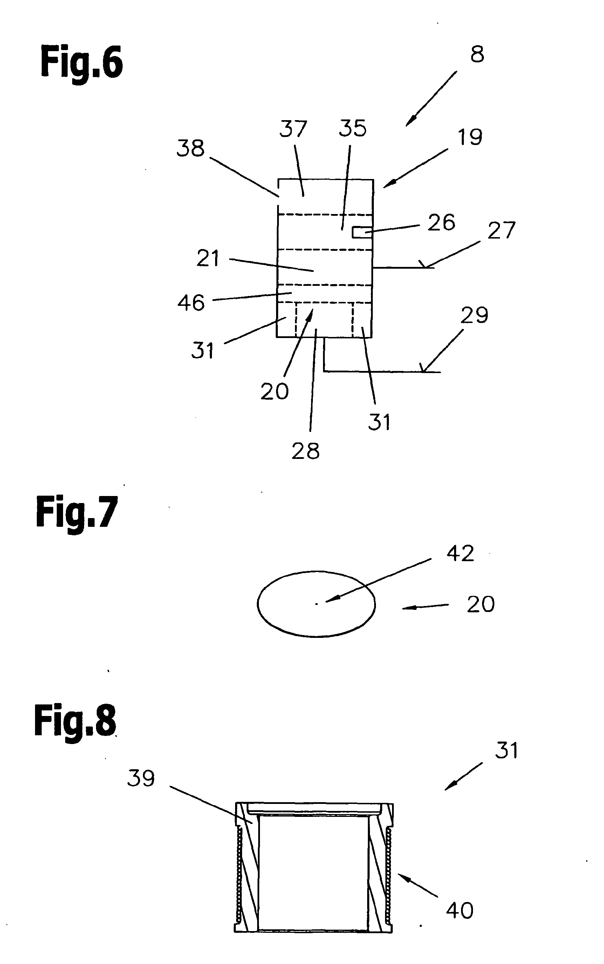

Die Heizeinrichtung 31 ist bevorzugt als Induktionsheizung ausgeführt. In diesem Fall wird die Heizeinrichtung 31 aus einem rollenförmigen Spulenkörper 39, auf welchem eine Wicklung 40 angeordnet ist, gebildet, wie in Fig. 8 dargestellt ist. Dabei bildet der Verdampfer 28 den Kern der Induktionsheizung. Zur Erwärmung des Verdampfers 28 wird über die Steuervorrichtung 13 ein hochfrequenter Wechselstrom an die Wicklung 40 angelegt und über induzierte Wirbelströme der als Verdampfer 28 ausgebildete Teil des Brennergehäuses 19 derart erwärmt, dass der flüssige Brennstoff verdampft wird. Bevorzugt ist der Spulenkörper 39 aus einem Material gefertigt, welches für ein Magnetfeld durchlässig und gleichzeitig thermisch isolierend ist. Beispielsweise erfüllen Kunststoffe diese Eigenschaften. Zusätzlich kann auch eine Luftspaltisolierung zwischen Verdampfer 28 und Spulenkörper 39 angeordnet sein, welche eine Isolationsschicht darstellt, sodass die Wicklungen 40 nicht überhitzt werden. Die Heizeinrichtung 31 dient hauptsächlich zur Erwärmung des Verdampfers 28 in der Startphase und zur Isolation des Verdampfers 28. Die thermische Isolation verhindert, dass der Verdampfer 28 Wärme abgibt, sodass dieser stets eine konstante Temperatur für einen stabilen Verdampfungsprozess aufweist. Dies ist die Grundvoraussetzung für einen stabilen Verbrennungsprozess.

Die entsprechende Ausbildung der Bereiche des Brenners 8 für einen stabilen Verbrennungsprozess wurden bereits angesprochen, werden aber im Folgenden noch im Detail beschrieben. Ein stabiler Verbrennungsprozess basiert im Wesentlichen auf einer stabilen Flamme. Diese wiederum benötigt dazu ein entsprechendes Brennstoffgemisch, also das richtige Verhältnis von Brennstoff und Luft. Dieses Verhältnis wird bei der erfindungsgemäßen Ladevorrichtung 1 durch die Brennstoffzufuhr geregelt, indem je nach Fördermenge des Brennstoffs entsprechend mehr oder weniger im Verdampfer 28 verdampft wird. Daraus resultiert wiederum ein höherer bzw. niedrigerer Druck des Brennstoffdampfes, wovon der vom Jet erzeugte Unterdruck abhängig ist. Da der Unterdruck für die Luftbeimischung verantwortlich ist, kann die Luftbeimischung auf die Brennstoffzufuhr zurückgeführt werden. Im nächsten Schritt ist es nun erforderlich, dass sich das Brennstoffgemisch im Wesentlichen auf dem gesamten Querschnitt des Brennergehäuses 19 nahezu gleichmäßig vermischt, sodass eine für den Verbrennungsprozess erforderliche stabile, blaue Flamme resultiert. Diese ist erforderlich, damit das Brennstoffgemisch vollständig verbrannt und kein Ruß gebildet wird, sodass eine hohe Lebensdauer der Ladevorrichtung 1 gewährleistet ist.

Der Hauptteil der Vermischung erfolgt im Raum des Brennraums 35 und wird im keramischen Füllkörper des Brennraums 35 abgeschlossen. Das Brennstoffgemisch ist im Raum und im keramischen Füllkörper entzündlich, sodass durch eine entsprechende Ansteuerung der Zündkerze zumindest eine Flamme gezündet wird. Die Hauptflamme ist dabei eine sogenannte Oxidationsflamme, welche sowohl im Raum als auch im keramischen Füllkörper brennt. Im Raum brennt auch noch eine sogenannte Nebenflamme, welche auch als Reduktionsflamme bezeichnet wird. Die Reduktionsflamme führt keine vollständige Verbrennung aus, da das Brennstoffgemisch in diesem Bereich noch nicht optimal vermischt ist, weil hier der Jet in den Raum eintritt. Da die Reduktionsflamme also unterhalb des keramischen Füllkörpers brennt, wird der dabei entstehende Ruß von der darüber brennenden Oxidationsflamme wiederum vollständig verbrannt. In Summe resultiert somit eine vollständige Verbrennung ohne die Bildung von Ruß. Ein derartiger Kompromiss des Vorhandenseins von Reduktionsflamme und Oxidationsflamme wird allerdings zu Gunsten der Baugröße des Brenners 8 und der einfachen, im Wesentlichen passiven und automatischen Herstellung des Brennstoffgemisches in Kauf genommen. Eine komplette vollständige Verbrennung wird bevorzugt auch dadurch unterstützt, dass der keramische Füllkörper mit Platin versetzt wird, wodurch dieser katalytisch aktiv wird und den Verbrennungsprozess entsprechend verbessert.

Wie bereits erwähnt, hat für einen stabilen Verbrennungsprozess der aus dem Brennstoffdampf gebildete Jet eine wesentliche Bedeutung. Daher sind auch die entsprechenden Faktoren zu berücksichtigen, welche Einfluss auf den Jet haben. In erster Linie ist das die Düse 20, welche den Jet aufgrund des Kanals 42 bzw.

Lochs bildet. Das heißt aber auch, dass der Brennstoffdampf nur durch den Kanal 42 austreten darf. Dementsprechend hat die Düse 20 auch die Aufgabe, die Mischkammer vom Verdampfer 28 abzudichten, sodass der Brennstoffdampf nur durch den Kanal 42 gebündelt austreten kann. Dementsprechend ist die Form der Düse 20 an die Form des Brennergehäuses 19 angepasst. Je nach Größe des Brenners 8 bzw. Leistung der Ladevorrichtung 1, kann die Düse 20 auch mehrere Kanäle 42 bzw. Löcher aufweisen, wodurch der Durchsatz des Jets erhöht wird und in weiterer Folge der thermische Energiedurchsatz bzw. -umsatz erhöht wird. Dies hat wiederum eine höhere Temperatur des Brennraums 35 zur Folge.

Da der Kanal 42 dem Druck des Jets standhalten muss, um einen konstanten Jet zu gewährleisten, sind entsprechende Anforderungen an die Fertigung der Düse 20 bzw. des Kanals 42 gegeben. Grundsätzlich kann der Kanal 42 durch Verfahren wie Erodieren oder Lasern exakt nach den Anforderungen an Form und Größe hergestellt werden. Der Kanal 42 kann in weiterer Folge auch beschichtet werden, wodurch die Standzeit deutlich erhöht werden kann, indem der Reibwert gesenkt wird.

Bevorzugt ist auch eine Überwachung des Verbrennungsprozesses vorgesehen, um eine sogenannte "gelbe" Flamme zu verhindern, welche Ruß verursachen würde und wodurch somit kein stabiler Verbrennungsprozess gegeben ist. Dies kann beispielsweise derart erkannt werden, indem in gewissen Zeitabständen eine Spannung an die Zündkerze angelegt wird. Die Spannung wird dabei entsprechend so lange erhöht, bis ein Lichtbogen gebildet wird. Die bei der Lichtbogenbildung gemessene Spannung dient als Maß für die Ionisierung des Brennstoffgemischs. Die Strecke zwischen den Polen der Zündkerze wird dabei über die ionisierte Luft im Abgasraum 37 bzw. im Raum überbrückt, also der Stromkreis geschlossen. Von der Leitfähigkeit der ionisierten Luft kann dann auf die Qualität der Verbrennung rückgeschlossen werden. Bei einer schlechten Verbrennung (gelbe Flamme) des Brennstoffgemischs ist die Luft weniger ionisiert und leitet demnach schlechter, sodass ein kleinerer Strom resultiert. Umgekehrt ist bei einer optimalen Verbrennung (blaue Flamme) das Brennstoffgemisch stark ionisiert und demnach gut elektrisch leitend, resultierend in einer höheren erforderlichen Spannung zur Bildung des Lichtbogens. Bevorzugt werden anhand einer Referenztabelle von der Steuervorrichtung 13 entsprechende Gegenmaßnahmen eingeleitet, wie beispielsweise die Fördermenge des Brennstoffs verändert. Ebenso kann dies angewandt werden, wenn die Zündkerze im Raum 36 angeordnet ist, wobei sich bei gleichbleibendem Effekt andere Spannungswerte einstellen.

Ein stabiler Verbrennungsprozess ist allerdings für die Ladevorrichtung 1 nur dann von Nutzen, wenn der Temperaturunterschied zwischen der "Heiß-Seite" und der "Kalt-Seite" des Thermoelements 9 ausreichend groß ist. Die Steuervorrichtung 13 kann den Temperaturunterschied überwachen, indem die Temperatur des Motorblocks 6 und des Wärmetauschers 17 erfasst und ausgewertet wird. Überschreitet eine Temperatur einen Grenzwert, wird der Verbrennungsprozess angepasst, beispielsweise gestoppt oder über die Brennstoffzufuhr bzw. die Heizeinrichtung 31 geregelt. Somit ist gewährleistet, dass das Thermoelement 9, welches eines der wesentlichen Komponenten der Stromerzeugungsvorrichtung 3 darstellt, nicht überhitzt und in weiterer Folge zerstört wird. Dadurch wird stets eine effektive Ladung des Energiespeichers 2 durch die Ladevorrichtung 1 gewährleistet.

Allgemein sei noch erwähnt, dass beim Gesamtaufbau der Ladevorrichtung 1 berücksichtigt ist, dass Wege von Abgas und Luft getrennt geführt sind. Dadurch kann es zu keiner unerwünschten Vermischung im Bereich um die Ladevorrichtung 1 kommen, wodurch ein entzündliches Brennstoffgemisch entstehen könnte. Dies würde allerdings nur dann der Fall sein, wenn eine unvollständige Verbrennung stattfindet. Als keramischer Füllkörper im Brennraum 35 und als Füllkörper 30 im Verdampfer 28 kann auch ein unstrukturierter Schaum eingesetzt werden.

Im Folgenden ist noch eine weitere Ausführungsform der Hauptkomponente der Ladevorrichtung 1, also des Brenners 8, anhand von Fig. 6 beschrieben. Dies auch in Zusammenschau mit den Fig. 1 bis 5. Das heißt, dass, sofern nicht anders beschrieben, die Funktion, der Aufbau, usw. daraus übernommen und/oder kombiniert werden können.

Im Wesentlichen besteht der Unterschied darin, dass im Brenner 8 zusätzlich ein sogenannter Reinigungsbereich 46 integriert ist. Dieser wird als Art Deckel des Verdampfers 28 angeordnet, sodass die Düse 20 vor Verschmutzungen geschützt wird, wodurch die Lebensdauer der Düse 20 und somit der gesamten Ladevorrichtung 1 stark verlängert werden kann. Der Reinigungsbereich 46 kann einen Abscheider und einen Abstandhalter beinhalten. Der Abscheider ist ähnlich der Düse 20 ausgebildet, wobei die Anzahl der Ausnehmungen um ein Vielfaches, beispielsweise das Zehn- bis Zwanzigfache höher ist als die Anzahl der Löcher der Düse 20. Die Ausnehmungen haben dabei die Aufgabe, den verdampften Brennstoff zu filtern. Somit lagern sich die bei der Verdampfung teilweise gebildeten Schmutzstoffe - wie beispielsweise Teer - in den Ausnehmungen ab. Durch die große Anzahl an Ausnehmungen haben die Ablagerungen im Wesentlichen keine Auswirkung auf die Durchlassmenge des Brennstoffdampfs. Dadurch würde es sehr lange dauern, bis alle Ausnehmungen durch die Schmutzstoffe verstopft sind. Der gefilterte Brennstoffdampf sammelt sich in einem Zwischenraum, welcher durch den als Kreisring ausgebildeten Abstandhalter gebildet wird. Der Zwischenraum dient im Wesentlichen dem Aufbau des erforderlichen Drucks zur Bildung des Jets und als Puffer für den Brennstoffdampf. Durch einen derartigen Aufbau des Reinigungsbereichs 46 kann die Filterung je nach Bedarf verfeinert und an die Qualität des Brennstoffs angepasst werden. Dies kann beispielsweise derart erfolgen, dass mehrere Abscheider übereinander positioniert werden. Dadurch wird der Weg durch die Ausnehmungen verlängert, sodass sich die Schmutzstoffe leichter ablagern können. Des Weiteren kann auch ein Filter im Reinigungsbereich 46 integriert werden, welcher beispielsweise durch vliesartige Materialien gebildet werden kann, sodass auch feinste Schmutzstoffe aus dem Brennstoffdampf gefiltert werden. Dieser Filter wird im Zwischenraum positioniert, und kann durch Ausbildung in Filterstufen eingestellt werden. Der Reinigungsbereich 46 wird wie die Düse 20 bzw. mit dieser befestigt.

Weiters ist eine Regelung der Luftzufuhr für den Verbrennungsprozess möglich, indem im Luftzufuhrrohr 27 eine Klappe angeordnet wird. Dies ist insbesondere beim Startvorgang des Verbrennungsprozesses von Vorteil, da sich der Verbrennungsprozess durch Reduktion der Luftzufuhr schneller stabilisiert. Dies kann mit der Funktion eines sogenannten Chokers, wie bei Fahrzeugen 7 allgemein bekannt, verglichen werden. Die Klappe ist beispielsweise aus Bimetall gebildet, sodass in Abhängigkeit des Temperaturunterschieds die Luftzufuhr geregelt wird.

## Patentansprüche

1. Anordnung einer Ladevorrichtung (1) in einem Fahrzeug (7), wobei die Ladevorrichtung (1) zum Laden eines Energiespeichers (2) des Fahrzeugs (7) dient und eine Stromerzeugungsvorrichtung (3), ein Ladegerät (4) und weitere Komponenten aufweist, wobei die Stromerzeugungsvorrichtung (3) durch eine Wärmequelle, welche zumindest einen mit einer Zuleitung (10) für einen Brennstoff verbundenen Brenner (8) umfasst, und ein Thermoelement (9) gebildet ist, und eine Seite des Thermoelements (9) mit der Wärmequelle und die weitere Seite des Thermoelements (9) mit einer Rückwand (14) des Gehäuses (5) verbunden ist, wobei die Stromerzeugungsvorrichtung (3), das Ladegerät (4) und die weiteren Komponenten in einem gemeinsamen Gehäuse (5) angeordnet sind, **dadurch gekennzeichnet, dass** im untersten Bereich eines Brennergehäuses (19) des Brenners (8) ein Verdampfer (28) für den zugeführten Brennstoff angeordnet ist, und die Rückwand (14) des Gehäuses (5) an einem zur Ableitung der Wärme dienenden Motorblock (6) des Fahrzeugs (7) befestigt ist.

2. Anordnung nach Anspruch 1, **dadurch gekennzeichnet, dass** in der Rückwand (14) ein Sensor zur Erfassung der Temperatur integriert ist.

3. Anordnung nach Anspruch 1 oder 2, **dadurch gekennzeichnet, dass** die Stromerzeugungsvorrichtung (3) vorzugsweise durch eine Isolierung (18) von den weiteren Komponenten im Gehäuse (5) getrennt angeordnet ist.

4. Anordnung nach einem der Ansprüche 1 bis 3, **dadurch gekennzeichnet, dass** die Wärmequelle aus einem Brenner (8) und einem Wärmetauscher (17) gebildet ist.

5. Anordnung nach Anspruch 4, **dadurch gekennzeichnet, dass** der Brenner (8) im Betrieb im Wesentlichen vertikal angeordnet ist.

6. Anordnung nach einem der Ansprüche 1 bis 5, **dadurch gekennzeichnet, dass** im Brennergehäuse (19) des Brenners (8) mehrere Bereiche übereinander angeordnet sind, wobei der Verdampfer (28) von einem Mischbereich (21), einem Brennraum (35) und einem Abgasraum (37) gefolgt wird, und in einem Bereich eine Zündvorrichtung (26) angeordnet ist, wobei im Brennraum (35) ein keramischer Füllkörper oberhalb eines Distanzrings angeordnet ist, um sicherzustellen, dass das Brennstoffgemisch nicht über den keramischen Füllkörper hinausströmt und der Verbrennungsprozess ausschließlich im Brennraum (35) stattfindet, wobei der Distanzring im Inneren einen Raum bildet und die Zündvorrichtung (26) in diesem Raum oder im Abgasraum (37) angeordnet ist.

7. Anordnung nach Anspruch 6, **dadurch gekennzeichnet, dass** der Verdampfer (28) mit dem Mischbereich (21) über eine Düse (20) verbunden ist und die Düse (20) zum Versorgen einer Mischkammer im Mischbereich (21) mit einem in dem Verdampfer (28) hergestellten Brennstoffdampf ausgebildet ist.

8. Anordnung nach Anspruch 6 oder 7, **dadurch gekennzeichnet, dass** eine Zuleitung (29) zum geregelten Zuführen eines flüssigen Brennstoffs an dem Verdampfer (28) angeschlossen ist und im Verdampfer (28) ein Füllkörper angeordnet ist.

9. Anordnung nach Anspruch 8, **dadurch gekennzeichnet, dass** der Verdampfer (28) mit einer Heizeinrichtung (31) verbunden ist.

10. Anordnung nach Anspruche 8, **dadurch gekennzeichnet, dass** die Heizeinzeinrichtung (31) durch eine Induktionsheizung mit einem mit Wicklungen (40) versehenen Spulenkörper (39), dessen Kern durch den Verdampfer (28) gebildet ist, realisiert ist.

11. Anordnung nach einem der Ansprüche 7 bis 10, **dadurch gekennzeichnet, dass** die Düse (20) als Scheibe ausgebildet und an die Form des Brennergehäuses (19) angepasst ist und zumindest einen Kanal (42) aufweist, wobei die Höhe der Scheibe und die Form des Kanals (42) an die Leistung des Brenners (8) angepasst ist, und der zumindest eine Kanal (42) vorzugsweise fluchtend mit einer Strömungsöffnung im Mischbereich (21) angeordnet ist.

12. Verfahren zur Erzeugung einer Wärmeenergie in einer Wärmequelle einer Stromerzeugungsvorrichtung (3) einer Ladevorrichtung (1) zum Laden eines Energiespeichers (2) eines Fahrzeugs (7), wobei von einem Brenner (8) der Wärmequelle die Wärmeenergie erzeugt wird, und die Wärmeenergie zumindest zum Teil von einem Thermoelement (9) der Stromerzeugungsvorrichtung (3) in Strom umgewandelt wird, wobei in einem im untersten Bereich eines Brennergehäuses (19) des Brenners (8) angeordneten Verdampfer (28) des Brenners (8) aus einem zugeführten Brennstoff ein Brennstoffdampf erzeugt wird, der Brennstoffdampf in einem Mischbereich (21) des Brenners (8) durch Beimischung von Luft zu einem Brennstoffgemisch vermischt und dieses in einem Brennraum (35) des Brenners (8) zur Erzeugung der Wärmeenergie verbrannt wird, wobei die Wärmeenergie über einen Abgasraum (37) einer Seite des Thermoelements (9) zugeführt wird und die andere Seite des Thermoelements (9) an einem Motorblock (6) des Fahrzeugs (7) befestigt wird.

13. Verfahren nach Anspruch 12, **dadurch gekennzeichnet, dass** zumindest ein Teil der Wärmeenergie zumindest über ein Brennergehäuse (19) des Brenners (8) an den Verdampfer (28) rückgeführt wird.

14. Verfahren nach Anspruch 12 oder 13, **dadurch gekennzeichnet, dass** der Brennstoffdampf mit einem Druck in den Mischbereich (21) geleitet wird, wobei durch den Druck die Luft automatisch beigemischt wird.

15. Verfahren nach einem der Ansprüche 12 bis 14, **dadurch gekennzeichnet, dass** zur Erzeugung des Brennstoffdampfs zumindest in einer Startphase eine Heizeinrichtung (31) aktiviert wird.

## Claims

1. Arrangement of a charging device (1) in a vehicle (7), wherein the charging device (1) is used for charging an energy storage (2) of the vehicle (7) and has an electricity-generating device (3), a charging unit (4) and further components, wherein the electricity-generating device (3) is formed by a heat source, which comprises at least one burner (8) connected to a supply line (10) for a fuel, and a thermoelement (9), and one side of the thermoelement (9) is connected to the heat source, and the other side of the thermoelement (9) is connected to a rear wall (14) of the housing (5), wherein the electricity-generating device (3), the charging unit (4) and the further components are arranged in a common housing (5), **characterised in that** an evaporator (28) for the supplied fuel is arranged in the lowest region of a burner housing (19) of the burner (8), and the rear wall (14) of the housing (5) is fixed to an engine block (6) of the vehicle (7) which is used to conduct away the heat.

2. Arrangement according to Claim 1, **characterised in that** a sensor for detecting the temperature is integrated in the rear wall (14).

3. Arrangement according to Claim 1 or 2, **characterised in that** the electricity-generating device (3) is arranged preferably separated from the further components in the housing (5) by insulation (18).

4. Arrangement according to one of Claims 1 to 3, **characterised in that** the heat source is formed from a burner (8) and a heat exchanger (17).

5. Arrangement according to Claim 4, **characterised in that** the burner (8) is arranged essentially vertically during operation.

6. Arrangement according to one of Claims 1 to 5, **characterised in that** a plurality of regions are arranged one above the other in the burner housing (19) of the burner (8), wherein the evaporator (28) is followed by a mixing region (21), a combustion chamber (35) and an exhaust gas chamber (37), and an ignition device (26) is arranged in one region, wherein a ceramic filler body is arranged above a spacer ring in the combustion chamber (35) to ensure that the fuel mixture does not flow out via the ceramic filler body and the combustion process takes place exclusively in the combustion chamber (35), wherein the spacer ring forms a chamber in the interior and the ignition device (26) is arranged in this chamber or in the exhaust gas chamber (37).

7. Arrangement according to Claim 6, **characterised in that** the evaporator (28) is connected to the mixing region (21) by means of a nozzle (20), and the nozzle (20) is configured to supply a mixing chamber in the mixing region (21) with a fuel vapour produced in the evaporator (28).

8. Arrangement according to Claim 6 or 7, **characterised in that** a supply line (29) for regulated supply of a liquid fuel is connected to the evaporator (28), and a filler body is arranged in the evaporator (28).

9. Arrangement according to Claim 8, **characterised in that** the evaporator (28) is connected to a heating means (31).

10. Arrangement according to Claim 8, **characterised in that** the heating means (31) is realised by an induction heating system having a coil body (39) provided with windings (40), the core of which coil body is formed by the evaporator (28).

11. Arrangement according to one of Claims 7 to 10, **characterised in that** the nozzle (20) is configured as a disc and is matched to the shape of the burner housing (19), and has at least one channel (42), wherein the height of the disc and the shape of the channel (42) are adapted to the output of the burner (8) and the at least one channel (42) is preferably arranged in alignment with a flow opening in the mixing region (21).

12. Method for generating heat energy in a heat source of an electricity-generating device (3) of a charging device (1) for charging an energy storage (2) of a vehicle (7), wherein the heat energy is generated by a burner (8) of the heat source, and the heat energy is at least partially converted into electricity by a thermoelement (9) of the electricity-generating device (3), wherein, in an evaporator (28) of the burner (8), which evaporator is arranged in the lowest region of a burner housing (19) of the burner (8), a fuel vapour is produced from a supplied fuel, the fuel vapour is mixed to form a fuel mixture by adding air in a mixing region (21) of the burner (8), and the said mixture is burnt in a combustion chamber (35) of the burner (8) to generate heat energy, wherein the heat energy is supplied to one side of the thermoelement (9) via an exhaust gas chamber (37), and the other side of the thermoelement (9) is fixed to an engine block (6) of the vehicle (7).

13. Method according to Claim 12, **characterised in that** at least some of the heat energy is fed back to the evaporator (28) via a burner housing (19) of the burner (8).

14. Method according to Claim 12 or 13, **characterised in that** the fuel vapour is conducted at a pressure into the mixing region (21), wherein the air is automatically added by the pressure.

15. Method according to one of Claims 12 to 14, **characterised in that** a heating means (31) is activated at least during a starting phase in order to produce the fuel vapour.

## Revendications

1. Arrangement d'un dispositif de charge (1) dans un véhicule (7), le dispositif de charge (1) servant à charger un accumulateur d'énergie (2) du véhicule (7) et présentant un dispositif de production de courant (3), un appareil de charge (4) et d'autres composants, le dispositif de production de courant (3) étant formé d'une source de chaleur qui comprend au moins un brûleur (8) raccordé à une conduite d'alimentation (10) de combustible, et d'un thermocouple (9), et un côté du thermocouple (9) étant raccordé à la source de chaleur et l'autre côté du thermocouple (9) étant raccordé à une paroi arrière (14) du carter (5), le dispositif de production de courant (3), l'appareil de charge (4) et les autres composants étant disposés dans un carter (5) commun, **caractérisé en ce que**, dans la zone la plus basse d'un carter de brûleur (19) du brûleur (8), il est disposé un évaporateur (28) pour le combustible de retour, et la paroi arrière (14) du carter (5) est disposée sur un bloc-moteur (6) du véhicule (7) servant à l'évacuation de la chaleur.

2. Arrangement selon la revendication 1, **caractérisé en ce qu'**un capteur est intégré dans la paroi arrière (14) pour la détection de la température.

3. Arrangement selon la revendication 1 ou 2, **caractérisé en ce que** le dispositif de production de courant (3) est de préférence disposé de façon séparée des autres composants dans le carter (5) par une isolation (18).

4. Arrangement selon l'une des revendications 1 à 3, **caractérisé en ce que** la source de chaleur est formée d'un brûleur (8) et d'un échangeur de chaleur (17).

5. Arrangement selon la revendication 4, **caractérisé en ce que** le brûleur (8) est disposé de façon essentiellement verticale pendant le fonctionnement.

6. Arrangement selon l'une des revendications 1 à 5, **caractérisé en ce que** l'évaporateur (28) est suivi d'une zone de mélange (21), d'une chambre de combustion (35) et d'une chambre d'effluent gazeux (37), et **en ce qu'**un dispositif d'allumage (26) est disposé dans une zone, un corps de remplissage en céramique étant disposé dans la chambre de combustion (35) au-dessus d'une bague d'espacement pour assurer que le mélange de combustible ne s'échappe pas via le corps de remplissage en céramique et que le processus de combustion s'effectue exclusivement dans la chambre de combustion (35), la bague d'espacement formant une chambre à l'intérieur et le dispositif d'allumage (26) étant disposé dans cette chambre ou dans la chambre d'effluent gazeux (37).

7. Arrangement selon la revendication 6, **caractérisé en ce que** l'évaporateur (28) est raccordé à la zone de mélange (21) par le biais d'une buse (20) et la buse (20) est constituée pour alimenter une chambre de mélange dans la zone de mélange (21) avec une vapeur de combustible produite dans l'évaporateur (28).

8. Arrangement selon la revendication 6 ou 7, **caractérisé en ce qu'**une conduite d'alimentation (29) destinée à l'amenée régulée d'un combustible liquide est raccordée à l'évaporateur (28) et **en ce qu'**un corps de remplissage est disposé dans l'évaporateur (28).

9. Arrangement selon la revendication 8, **caractérisé en ce que** l'évaporateur (28) est raccordé à un dispositif de chauffage (31).

10. Arrangement selon la revendication 8, **caractérisé en ce que** le dispositif de chauffage (31) est réalisé par un chauffage par induction avec un corps de bobine (39), muni d'enroulements (40), dont le noyau est formé par l'évaporateur (28).

11. Arrangement selon l'une des revendications 7 à 10, **caractérisé en ce que** la buse (20) est constituée en tant que disque et est adaptée à la forme du carter de brûleur (19) et présente au moins un canal (42), la hauteur du disque et la forme du canal (42) étant adaptées à la puissance du brûleur (8), et le canal (42) au moins au nombre de un étant disposé de préférence en affleurement avec une ouverture d'écoulement dans la zone de mélange (21).

12. Procédé de production d'une énergie thermique dans une source de chaleur d'un dispositif de production de courant (3) d'un dispositif de charge (1) pour le chargement d'un accumulateur d'énergie (2) d'un véhicule (7), l'énergie thermique étant produite par un brûleur (8) de la source de chaleur, et l'énergie thermique étant au moins en partie convertie en courant par un thermocouple (9) du dispositif de production de courant (3), une vapeur de combustible étant, à partir d'un combustible amené, produite dans un évaporateur (28) du brûleur (8) disposé dans la zone la plus basse d'un carter de brûleur (19) du brûleur (8), la vapeur de combustible étant mélangée dans une zone de mélange (21) du brûleur (8) par addition d'air à un mélange de combustible, et ce mélange de combustible étant brûlé dans une chambre de combustion (35) du brûleur (8) pour la production de l'énergie thermique, l'énergie thermique étant acheminée à un côté du thermocouple (9) par le biais d'une chambre d'effluent gazeux (37), et l'autre côté du thermocouple (9) étant fixée à une bloc-moteur (6) du véhicule (7).

13. Procédé selon la revendication 12, **caractérisé en ce qu'**au moins une partie de l'énergie thermique est renvoyée à l'évaporateur (28) au moins par le biais d'un carter de brûleur (19) du brûleur (8).

14. Procédé selon la revendication 12 ou 13, **caractérisé en ce que** la vapeur de combustible est conduite sous pression dans la zone de mélange (21), l'air étant automatiquement ajouté par la pression.

15. Procédé selon l'une des revendications 12 à 14, **caractérisé en ce qu'**un dispositif de chauffage (31) est activé, au moins dans une phase de démarrage, pour la production de la vapeur de combustible.
